# EUROPÄISCHE PATENTSCHRIFT

(11) **EP 3 825 645 B1**
(45) Veröffentlichungstag und Bekanntmachung des Hinweises auf die Patenterteilung: **03.05.2023**
(21) Anmeldenummer: 20206105.7
(22) Anmeldetag: 06.11.2020
(51) Int. Cl.: G01B 5/30, B60J 10/00

(54) **VORRICHTUNG ZUM ERFASSEN EINER VERBINDUNGSSTELLE AN EINEM AUS EINER VIELZAHL VON MITEINANDER VERBUNDENEN STRANGABSCHNITTEN BESTEHENDEN FLEXIBLEN MATERIALSTRANG**
DEVICE FOR DETECTING A JOINT ON A FLEXIBLE MATERIAL STRAND CONSISTING OF A PLURALITY OF INTERCONNECTED STRAND SECTIONS
DISPOSITIF DE DÉTECTION D'UN JOINT SUR UN BRIN DE MATÉRIAU FLEXIBLE CONSTITUÉ D'UNE PLURALITÉ DE SECTIONS DE BRIN INTERCONNECTÉES

(30) Priorität: 22.11.2019 DE 102019131553
(43) Veröffentlichungstag der Anmeldung: 26.05.2021
(73) Patentinhaber: Audi AG, 85045 Ingolstadt (DE)
(72) Erfinder: MÜLLER, Manuela, 74189 Weinsberg (DE); PUHL, Felix, 74189 Weinsberg (DE); KORN, Alexander, 3484 Grafenwörth (AT)

(56) Entgegenhaltungen:
- EP-A1- 3 208 067
- EP-A1- 3 778 158
- DE-A1-102016 123 487
- DE-B- 1 075 544

## Beschreibung

Die Erfindung betrifft eine Vorrichtung zum Erfassen einer Verbindungsstelle an einem aus einer Vielzahl von miteinander verbundenen Strangabschnitten bestehenden flexiblen Materialstrang, insbesondere einem Dichtmaterialstrang.

In vielen Anwendungsbereichen werden auf einer Rolle aufgewickelte Endlos-Materialstränge verarbeitet, die flexibel sind und zumeist aus Kunststoff bestehen. Zu nennen ist insbesondere die Verarbeitung von Dichtmaterialsträngen, beispielsweise in der Automobilindustrie, wo solche Dichtmaterialstränge beispielsweise zur Ausbildung und Applikation von Türdichtungen verwendet werden. Der Materialstrang besteht hier, gleichbedeutend aber auch für viele andere Anwendungen, aus einem hinreichend flexiblen, oft auch geschäumten Kunststoffmaterial, das herstellerseitig in Form von entsprechend langen einzelnen Strangabschnitten hergestellt wird, die sodann miteinander verbunden werden, was zumeist durch einen stoffschlüssigen Verbund erfolgt, wonach der "Endlosstrang" auf eine Rolle aufgewickelt wird, wobei Stranglängen von 1000 m oder 1500 m üblich sind.

Im Rahmen der Verarbeitung eines solchen Dichtmaterialstrangs wird der Strang von dieser Rolle abgezogen und in entsprechend bemessene, einzelne Abschnitte, die jeweils die geforderte Länge für beispielsweise eine Türdichtung besitzen, geschnitten, wonach dieser Abschnitt mithilfe eines Roboters an die Tür angerollt respektive angeklebt wird. Innerhalb des gesamten Materialstrangs finden sich jedoch die herstellungsbedingt beispielsweise durch das Verbinden einzelner längerer Strangabschnitte oder aufgrund eines Herausschneidens von extrusionsbedingten Fehlerstellen der Extrusion etc. ausgebildeten Verbindungsstellen, wo die einzelnen Strangabschnitte miteinander verbunden sind. Diese Verbindungsstellen dürfen jedoch oft, insbesondere im Automobilbereich, nicht am Fahrzeug angebracht werden, dürfen also nicht verarbeitet werden. Es ist daher erforderlich, diese Verbindungsstellen im Rahmen der Verarbeitung des Materialstrangs zu erkennen. Hierzu ist es zum einen bekannt, ein optisches Inspektionssystem zu verwenden, das durch eine Oberflächenkontrolle und Dimensionsvermessung kleinste Fehler und Materialabweichungen in dem extrudierten Materialstrang, also dem Gummiprofil, detektiert. Eine derart erfasste Fehlstelle kann anschließend entfernt werden. Dieses vergleichsweise teure, groß bauende System detektiert jedoch neben den eigentlichen Verbindungsstellen auch anderweitige Fehlstellen, die im Hinblick auf die jeweilige Anwendung eigentlich unproblematisch sind, jedoch trotz allem herausgeschnitten werden, so dass der Verschnitt unter Verwendung einer solchen optischen Kontrolleinrichtung übermäßig groß ist.

EP3208067A1 offenbart eine Vorrichtung zur Messung der Materialdicke eines Gummistrangs, wobei ein verschwenkbarer Messarm durch eine Dickenänderung unterschiedlich ausgelenkt wird.

Alternativ ist es bekannt, die Stoßstellen bereits herstellerseitig optisch zu kennzeichnen, so dass sie bei der Verarbeitung auf einfache Weise optisch detektiert werden können. Dies wird jedoch sehr selten angeboten, darüber hinaus ist man von der Richtigkeit der Kontrolle seitens des Herstellers abhängig.

Der Erfindung liegt das Problem zugrunde, eine entsprechend einfach konzipierte Vorrichtung zum Erfassen einer solchen Verbindungsstelle anzugeben.

Zur Lösung dieses Problems ist erfindungsgemäß eine Vorrichtung zum Erfassen einer Verbindungsstelle an einem aus einer Vielzahl von miteinander verbundenen Strangabschnitten bestehenden flexiblen Materialstrang, insbesondere einem Dichtmaterialstrang, gemäß Anspruch 1 vorgesehen.

Die Erfindung sieht eine quasi elektro-mechanisch arbeitende Vorrichtung vor, bei der der Materialstrang mithilfe eines gegen ihn drückenden Drucckörpers quasi abgetastet respektive gezielt verformt wird. Dem liegt die Erkenntnis zugrunde, dass sich das mechanische respektive elastische Verhalten des Materialstrangs an der Verbindungsstelle, wo zwei Strangabschnitte stoffschlüssig miteinander verbunden sind und sich demzufolge die Materialdichte und -beschaffenheit lokal ändert, im Vergleich zum sonstigen Bereich des Materialstrangs ändert. Der Druckkörper drückt gegen die Oberfläche des Strangs und drückt minimal in das Strangmaterial ein, das heißt, dass der Strang oberflächlich leicht deformiert wird. Der Materialstrang selbst wird an dem zwar schwenkbaren, insoweit aber positionsfesten Druckkörper vorbei bewegt, so dass der Druckkörper quasi z. B. auf der Strangoberseite wandert wenn er oberseitig aufliegt, wobei er natürlich auch an anderen Strangseiten aufliegen kann. Wird nun eine Verbindungsstelle, also eine Naht, unter den Druckkörper bewegt, so ist diese etwas härter, resultierend aus der höheren Materialdichte aufgrund des stoffschlüssigen Verbundes, so dass der Druckkörper hierüber mitgenommen und geringfügig aus seiner Position relativ zum Strang verschwenkt wird, das heißt, dass er relativ zum Materialstrang verschwenkt. Dem Druckkörper ist eine Sensoreinrichtung zugeordnet, die die Position respektive die Schwenkbewegung des Drucckörpers erfasst und demzufolge die durch das Vorbeibewegen der Verbindungsstelle oder Naht induzierte Schwenkbewegung detektiert, worüber die Verbindungsstelle ermittelt wird. Diese Sensorinformation kann nun beispielsweise einer geeigneten Steuerungseinrichtung gegeben werden, der auch die Vorschubgeschwindigkeit des Materialstrangs bekannt ist, so dass die Steuerungseinrichtung die Ist-Position der Verbindungsstelle sehr exakt erfassen kann und beispielsweise eine nachgeschaltete Schneid-einrichtung ansteuern kann, um den Bereich der Verbindungsstelle herauszuschneiden.

Die erfindungsgemäße Vorrichtung ist sehr kompakt, da sie letztlich lediglich den schwenkbaren Druckkörper sowie eine entsprechende Sensoreinrichtung benötigt. Dies ermöglicht es, die Vorrichtung flexibel innerhalb der Applikations- oder Verarbeitungsstrecke zu integrieren. Neben einer einfachen Bedienung und Handhabung und einer einfachen Wartung respektive einem nahezu verschleißfreien Betrieb ist insbesondere der mögliche Verschnitt quasi auf ein Minimum reduziert, da über die erfindungsgemäße Vorrichtung eine sehr exakte Verbindungsstellenerfassung und auch eine sehr genaue Qualifizierung der Fehlstelle als Verbindungsstelle möglich ist.

Wie beschrieben liegt der Druckkörper mit leichtem Druck an der Strangoberseite an und ist schwenkbar gelagert. Bevorzugt ist hierzu der Druckkörper als schwenkbar gelagerte Taststange oder -stift ausgeführt, also als dünneres, gegebenenfalls auch nadelartiges Tastelement, das mit seiner Spitze, die bevorzugt keilförmig oder kegelig zuläuft und bevorzugt gerundet ist, mit geringer Vorspannung respektive Druck auf der Strangoberseite aufliegt. Der Materialstrang kann ohne Probleme unter der Taststange respektive der Stangenspitze hindurchgezogen werden. Hierbei kommt es, da die Taststange auf dem Strang abgleitet, nicht zu einer Verschwenkung, da sich die Materialeigenschaften des Strangmaterials nicht ändern, weil keine Verbindungsstelle gegeben ist. Erst wenn diese Verbindungsstelle quasi gegen die Taststangenspitze läuft, wird diese quasi von der Verbindungsstelle resultierend aus den Eigenschaftsänderungen mitgenommen und verschwenkt, was anschließend detektiert wird.

Dabei sind unterschiedliche Anordnungsvarianten der Taststange relativ zur Zugrichtung des Materialstrangs und damit zum Materialstrang selbst gegeben. Die Taststange kann unter einem Winkel < 90° zur Zugrichtung des Materialstrangs angeordnet sein. Das heißt, dass sie geringfügig entgegen der Zugrichtung angeordnet ist, wobei der Winkel > 60° und < 90° sein soll, und beispielsweise im Bereich von ca. 75 - 85° liegen sollte. Durch diese Ausrichtung ist sichergestellt, dass die Verbindungsstelle, die sich ja letztlich nicht aus der Materialstrangebene erhebt, sondern lediglich aufgrund einer unterschiedlichen mechanischen Strangmaterialeigenschaft definiert ist, in Interaktion mit der Taststange gelangt, so dass diese verschwenkt wird. Alternativ ist es aber auch denkbar, dass die Taststange unter einem Winkel > 90° zur Zugrichtung des Materialstrangs angeordnet ist. Auch hier kann der Materialstrang problemlos unter der Taststangenspitze hindurchgezogen werden, die auch hier einer etwaigen Eigenschaftsänderung des Materialstrangs, eine Verbindungsstelle indizierend, folgt und verschwenkt wird.

Die Taststange selbst ist zweckmäßigerweise in einer Halterung fixiert, die schwenkbar gelagert ist, was eine einfache Montage wie aber auch Schwenklagerung der Taststange ermöglicht.

Wie beschrieben, drückt der Druckkörper gegen den Materialstrang respektive die Oberfläche des Strangs, so dass es zu einer geringen oberflächlichen Deformation des Strangs kommt. Dabei kann der Druckkörper eigengewichtsbedingt gegen den Materialstrang drücken. In diesem Fall ist entweder die Taststange selbst hinreichend schwer, oder an ihr ist beispielsweise ein zusätzliches definiertes Gewicht angebracht, insbesondere im Bereich der Taststangenspitze, so dass ein entsprechender Druck erzeugt wird. Alternativ und bevorzugt ist es denkbar, dass ein Spannmittel zum Drücken des Druckkörpers gegen den Materialstrang vorgesehen ist. Über dieses Spannmittel kann der Druckkörper respektive die Taststange definiert gegen den Materialstrang gedrückt respektive vorgespannt werden. Denkbar ist, als Spannmittel ein Federelement zu verwenden, also beispielsweise eine Schraubenfeder, über die die Taststange gegen den Strang angefedert ist.

Über dieses Spannmittel wird wie beschrieben der Druckkörper gegen den Materialstrang verspannt. Läuft eine Verbindungsstelle in den Taststangenbereich, so wird die Taststange, je nach Richtung der Vorspannkraft und Orientierung der Taststange relativ zur Stranglängsachse bzw. Förderrichtung, in Richtung der oder entgegengesetzt zur Vorspannrichtung bewegt respektive verschwenkt, es findet also eine Schwenkbewegung um ihren Lagerpunkt statt. Um nach Durchlaufen der Verbindungsstelle die Taststange wieder in eine Grundstellung zu bewegen, ist es zweckmäßig, wenn ein zweites Spannmittel zum Bewegen des Druckkörpers in eine Grundstellung, das entgegengesetzt zum ersten Spannmittel arbeitet, vorgesehen ist. Dieses zweite Spannmittel arbeitet also entgegengesetzt zum ersten Spannmittel und stellt sicher, dass der Druckkörper respektive die Taststange nach Passieren einer Verbindungsstelle stets wieder in eine definierte Ausgangsstellung, in der auch wiederum die Grundvorspannung gegeben ist, gebracht wird.

Um diese Grundstellung zu definieren, ist zweckmäßigerweise ein Anschlag vorgesehen, gegen den der Druckkörper respektive die Taststange über das zweite Spannmittel bewegt wird. Dieser Anschlag verhindert des Weiteren auch ein Überschwingen, wenn nach Durchlauf einer Verbindungsstelle die Taststange über das zweite Spannmittel wieder zurück in die Grundstellung gezogen wird.

Als erstes und/oder zweites Spannmittel ist zweckmäßigerweise ein Federelement vorgesehen, bevorzugt eine Schraubenfeder, die an einem Ende an einem entsprechenden positionsfesten Auflager fixiert ist und mit dem anderen Ende unmittelbar oder mittelbar mit dem Druckkörper respektive der Taststange oder beispielsweise auch der Halterung gekoppelt ist.

Der Druckkörper selbst ist bevorzugt aus Kunststoff, das heißt, dass beispielsweise eine Kunststofftaststange verwendet wird. Die Taststange ist demzufolge sehr leicht, kann also ohne Probleme auch durch eine extrem schmale oder kleine Verbindungsstelle aus der Grundstellung verschwenkt werden.

Ein zentrales Element der erfindungsgemäßen Vorrichtung neben dem schwenkbaren Druckkörper ist die Sensoreinrichtung, die die etwaige Drucckörper- oder Taststangenverschwenkung erfasst. Als Sensoreinrichtung kann beispielsweise ein induktiv arbeitender Sensor verwendet werden, auch der Einsatz eines kapazitiv arbeitenden Sensors oder eines optisch arbeitenden Sensors ist denkbar, wobei diese Aufzählung nicht abschließend ist.

Für eine sichere Bewegungserfassung ist es mitunter zweckmäßig, am Druckkörper, insbesondere der Taststange, ein mit der Sensoreinrichtung interagierendes Element anzuordnen. Dies insbesondere, wenn es sich um einen induktiv oder kapazitiv arbeitenden Sensor handelt. In diesem Fall wird bevorzugt ein metallenes Element verwendet, beispielsweise ein Metallröhrchen, das auf die Taststange aufgeschoben wird. Ein solches Element respektive metallenes Element kann aber auch bei Verwendung eines optischen Sensors verwendet werden. Alternativ kann beispielsweise die aus Kunststoff bestehende Taststange von Haus aus mit einem solchen Element, beispielsweise einer endseitigen Stangenverbreiterung oder Ähnliches, ausgeführt werden, welches verbreiterte Element mit der Sensoreinrichtung, beispielsweise der optischen Sensoreinrichtung, interagiert.

Um den Materialstrang möglichst gleichförmig in dem Bereich, in dem die eigentliche Prüfung stattfindet, zu führen und zu bewegen, ist es zweckmäßig, eine Strangführung vorzusehen, mit einer seitlichen Öffnung, in der der Druckkörper am freiliegenden Materialstrang angreift. Alternativ zu einer einteiligen Strangführung ist es auch denkbar, dass zwei in Förderrichtung des Materialstrangs voneinander beabstandete Strangführungen vorgesehen sind, zwischen denen der Druckkörper am Materialstrang aufliegt. Der Materialstrang ist also zumindest in dem Bereich, in dem die Druckkörperprüfung stattfindet, entsprechend definiert geführt, also über die eine oder die beiden Strangführungen gehaltert, so dass sich stets eine definierte Strangstrecke in dem Bereich, in dem der Druckkörper am Materialstrang anliegt, gegeben ist. Hierüber ist sichergestellt, dass der Druckkörper stets an derselben Querposition am Materialstrang anliegt und dieser nicht zur Seite ausweicht.

Schließlich ist bevorzugt eine Steuerungseinrichtung vorgesehen, die mit der Sensoreinrichtung sowie einer über sie in Abhängigkeit der Sensorerfassung ansteuerbaren, der Verbindungsstellenerfassung nachgeschalteten Schneideinrichtung kommuniziert. Wie beschrieben liegt der Steuerungseinrichtung einerseits die Sensorinformation, andererseits aber auch eine Geschwindigkeitsinformation über die Fördergeschwindigkeit vor, so dass die Steuerungseinrichtung eine exakte Positionszuordnung zur erfassten Verbindungsstelle vornehmen kann. An der Schneideinrichtung, die ebenfalls über die Steuerungseinrichtung gesteuert wird, werden nun beispielsweise definierte Stranglängen abgeschnitten, die beispielsweise jeweils zur Bildung einer umlaufenden Türdichtung benötigt werden. Wird nun eine Verbindungsstelle detektiert, so kann die entsprechende Stranglänge nicht zur Bildung einer Türdichtung verwendet werden. Aus diesem Grund steuert die Steuerungseinrichtung die Schneideinrichtung nun so an, dass die Schneideinrichtung den Strang kurz hinter der erfassten Verbindungsstelle abschneidet. Das abgeschnittene, die Verbindungsstelle enthaltende Strangstück wird verworfen, beginnend ab dem Schnitt wird sodann wieder eine neue Stranglänge geschnitten. Da die erfindungsgemäße Vorrichtung eine sehr exakte Verbindungsstellenerfassung und -erkennung ermöglicht, kann auf diese Weise der Verschnitt gering gehalten werden.

Neben der Vorrichtung selbst betrifft die Erfindung ferner ein Verfahren zum Erfassen einer Verbindungsstelle an einem aus einer Vielzahl von miteinander verbundenen Strangabschnitten bestehenden flexiblen Materialstrang, insbesondere einem Dichtmaterialstrang, gemäß Anspruch 15.

Der Druckkörper selbst wird, wenn nicht allein durch sein Eigengewicht, dann bevorzugt mittels eines Spannmittels, insbesondere eines Federelements gegen den Materialstrang gedrückt, insbesondere, wenn bei horizontaler Einbaulage der Vorrichtung die Gewichtskraft keinen Einfluss hat. Hierüber wird eine definierte Vorspannung erwirkt.

Um den Druckkörper auch stets in eine ausgezeichnete Grundstellung zu bringen, wenn eine erfasste Verbindungsstelle durchgelaufen ist, ist zweckmäßigerweise der Druckkörper auch mittels eines zweiten Spannmittels, insbesondere eines Federelements, das entgegengesetzt zum ersten Spannmittel arbeitet, in eine Grundstellung gespannt.

Als erstes oder zweites Spannmittel wird zweckmäßigerweise eine Schraubenfeder verwendet.

Als Sensoreinrichtung kann eine induktiv, kapazitiv oder optisch arbeitender Sensor verwendet werden, wobei diese Aufzählung nicht abschließend ist.

Weiterhin ist es zweckmäßig, wenn die Steuerungseinrichtung mit der Sensoreinrichtung kommuniziert und eine der Verbindungsstellenerfassung nachgeschaltete Schneideinrichtung in Abhängigkeit der Sensorerfassung steuert, so dass gestützt auf die Sensorinformation definiert die Verbindungsstelle herausgeschnitten werden kann.

Weiterhin kann zur Schaffung definierter Verhältnisse im Bereich der Druckbeaufschlagung der Materialstrang in einer Strangführung mit einer seitlichen Öffnung, im Bereich welcher der Druckkörper angreift, oder mittels zweier in Förderrichtung beabstandeter Strangführungen geführt werden. Hierüber ist ein seitliches Ausweichen des Strangs ausgeschlossen und der Druckkörper kann stets an derselben Querposition gegen den Materialstrang drücken. Die Strangführung oder die Strangführungen können mit einer Gleitauflage oder dergleichen versehen sein, so dass die Reibung zwischen dem Strang und den Führungen minimiert werden kann.

Weitere Vorteile und Einzelheiten ergeben sich aus den im Folgenden beschriebenen Ausführungsbeispielen sowie anhand der Zeichnungen. Dabei zeigen:
- Fig. 1: eine Prinzipdarstellung einer erfindungsgemäßen Vorrichtung einer ersten Ausführungsform während der Strangprüfung,
- Fig. 2: die Anordnung aus Fig. 1 bei Durchlaufen einer Verbindungsstelle durch die Vorrichtung,
- Fig. 3: eine Teilansicht, gesehen in Förderrichtung, der Vorrichtung aus Fig. 1 zur Darstellung einer Strangführung,
- Fig. 4: eine Prinzipdarstellung einer erfindungsgemäßen Vorrichtung einer zweiten Ausführungsform mit unterschiedlicher Anordnung der Federelemente,
- Fig. 5: eine Prinzipdarstellung einer erfindungsgemäßen Vorrichtung einer dritten Ausführungsform mit in die andere Richtung angestellter Taststange, und
- Fig. 6: eine Prinzipdarstellung einer erfindungsgemäßen Vorrichtung umfassend eine Steuerungseinrichtung sowie eine zugeordnete Schneideinrichtung.

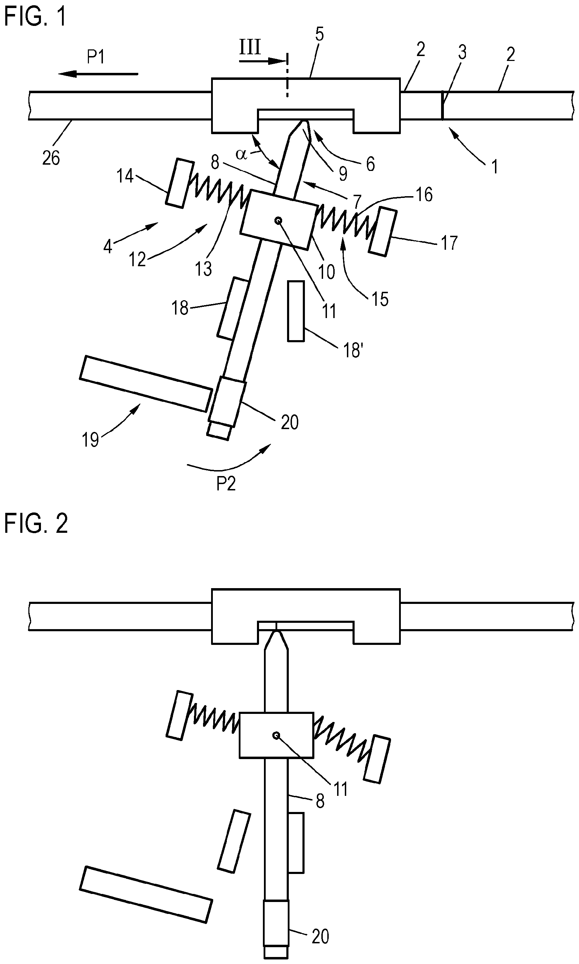

Fig. 1 zeigt eine Prinzipdarstellung einer erfindungsgemäßen Vorrichtung zum Erfassen einer Verbindungsstelle an einem aus einer Vielzahl von miteinander verbundenen Strangabschnitten bestehenden, flexiblen Materialstrang, insbesondere einem Dichtmaterialstrang. Die Figur zeigt einen Materialstrang 1, der von einer nicht näher gezeigten "Endlos"-Rolle abgewickelt wird. Der Materialstrang 1 besteht aus mehreren miteinander verbundenen Strangabschnitten 2, die über Verbindungsstellen 3, an denen die Strangabschnitte 2 stoffschlüssig miteinander verbunden sind, zu dem Endlosstrang verbunden sind.

Der Materialstrang 1 wird, wie durch den Pfeil P1 dargestellt ist, in den Arbeitsbereich einer erfindungsgemäßen Vorrichtung 4 zur Verbindungsstellenerfassung bewegt. In dem Bereich, in dem die Vorrichtung 4 angeordnet ist, ist der Materialstrang in einer Strangführung 5 geführt, die ihn dort definiert führt und ein Ausweichen zur Seite hin verhindert. Gegebenenfalls ist die Strangführung 5 mit einem die Reibung zum Materialstrang 1 reduzierenden Gleitbelag versehen. Die Strangführung 5 weist eine seitliche Öffnung 6 auf, in die ein Druckkörper 7 der Vorrichtung 4 seitlich eingreift. Der Drucckörper 7 ist hier als Taststange 8 mit einer Spitze 9 ausgeführt, wobei die Spitze 9 an ihrem Ende leicht abgerundet ist. Die Taststange 8 ist bevorzugt aus Kunststoff gefertigt. Sie drückt mit ihrer Spitze 9, wie in Fig. 1 gezeigt, geringfügig in die Oberfläche des Materialstrangs 1 ein, deformiert diese also minimal.

Die Taststange 8 ist in einer Halterung 10 aufgenommen, die um eine Schwenkachse 11 schwenkgelagert ist, das heißt, dass die Taststange 8 selbst relativ zum Materialstrang 1 verschwenkt werden kann. Die Halterung 10 ist über ein erstes Spannmittel 12 in Form einer Schraubenfeder 13 derart vorgespannt, dass die Spitze 9 mit definierter, geringer Vorspannung gegen die Strangoberfläche gedrückt wird. Hierzu ist das Federelement 13 mit einem Ende an einem positionsfesten Auflager 14 befestigt, mit dem anderen Ende an der Halterung 10.

Ihr gegenüberliegend ist ein zweites Spannmittel 15 in Form eines weiteren Federelements 16 angeordnet, das ebenfalls mit einem Ende an der Halterung 10 und mit dem anderen Ende an einem Auflager 17 befestigt ist. Über dieses zweite Spannmittel 16 wird sichergestellt, dass die Taststange 8 nach Durchlauf einer Verbindungsstelle 3 auch wieder definiert in eine Ausgangsstellung zurückgezogen wird, in welcher die Taststange 8 an einem Anschlag 18 anliegt, der die Grundstellung definiert. Die Ausschwenkbewegung wird durch einen zweiten Anschlag 18' begrenzt.

Beide Spannmittel 12, 15 bzw. Federelemente 13, 16 sind versetzt zur Schwenkachse 11 an der Halterung 10 befestigt, so dass ein Drehmoment, das die Auslenkung bzw. Rückstellung unterstützt, erzeugt wird. Anstelle der Schraubenfedern können auch andere Federn, z. B. Drehfedern verwendet werden.

Weiterhin vorgesehen ist eine Sensoreinrichtung 19, bei der es sich um einen induktiv, kapazitiv oder optisch arbeitenden Sensor handelt. Diese Sensoreinrichtung dient dazu, eine etwaige Schwenkbewegung des Druckkörpers 7 respektive der Taststange 8 um die Schwenkachse 11 zu erfassen, was ein eindeutiges Indiz für den Durchlauf einer Verbindungsstelle 3 ist. Insbesondere, wenn es sich bei der Sensoreinrichtung 19 um eine induktiv oder kapazitiv arbeitende Sensoreinrichtung handelt, ist zweckmäßigerweise an der aus Kunststoff gefertigten Taststange 8 ein metallenes Element 20, beispielsweise ein Metallröhrchen, aufgesetzt, das mit der Sensoreinrichtung 19 interagiert. Die Sensoreinrichtung 19 ist, worauf nachfolgend noch eingegangen wird, mit einer entsprechenden Steuerungseinrichtung verbunden, über die beispielsweise der Betrieb einer nachgeschalteten Schneideinrichtung gesteuert wird, um eine erfasste Verbindungsstelle 3 herauszuschneiden.

Wird der Materialstrang 1 in Richtung des Pfeils P1 bewegt, so wandert die Verbindungsstelle 3 in den Bereich unterhalb des Druckkörpers, der ersichtlich in der Grundstellung unter einem Winkel α < 90° zur Zugrichtung gemäß Pfeil P1 steht. In der Verbindungsstelle 3 ändern sich schlagartig die Materialeigenschaften, da dort die beiden Strangabschnitte 2 stoffschlüssig miteinander verbunden sind, beispielsweise miteinander verschweißt sind. Die Materialdichte in diesem Bereich ist deutlich größer, die Materialeigenschaften haben sich verändert, das Material ist in diesem Verbindungsstellenbereich weit weniger flexibler respektive elastisch. Dies führt dazu, dass der Druckkörper 7, der im Bereich außerhalb der Verbindungsstelle 3 geringfügig in die Oberfläche 26 des Materialstrangs 1 eindrückt, durch die durchlaufende Verbindungsstelle quasi in Bewegungsrichtung des Materialstrangs 1 mitgenommen wird, so dass es zu einem Verschwenken um die Schwenkachse 11 in Richtung des Pfeils P2 kommt. Das heißt, dass die Taststange 8 aus ihrer in Fig. 1 gezeigten Grundstellung geringfügig herausgeschwenkt wird, in eine Stellung, wie sie in Fig. 2 übertrieben deutlich gezeigt ist. Ersichtlich hat sich die Taststange 8 aufgrund ihrer Verschwenkung um die Schwenkachse 11 von der Sensoreinrichtung 19 wegbewegt, der Abstand zwischen Sensoreinrichtung 19 und dem mit ihr interagierenden Element 20 ist deutlich größer. Dies wird über die nachgeschaltete Steuerungseinrichtung erfasst, was ein eindeutiges Indiz für den Durchlauf einer Verbindungsstelle 3 ist. Sobald die Verbindungsstelle 3 den Druckkörper 7 passiert hat, drückt diese wieder wie vorher in den weichen, flexiblen Materialstrang 1 ein, er wird über das zweite Federelement 16 wieder in die in Fig. 1 gezeigte Grundstellung zurückbewegt. Die Sensoreinrichtung liefert demzufolge quasi einen Signalpeak, der die Hin- und Rückbewegung des Druckkörpers 7 beschreibt.

Über diese Sensorinformation kann eine zugeordnete Steuerungseinrichtung sehr exakt eine etwaige Verbindungsstelle 3 erfassen, da wie beschrieben der Signalpeak relativ scharf ist, nachdem die Verbindungsstelle relativ schmal ist. Darüber hinaus kann die Steuerungseinrichtung, da ihr die Fördergeschwindigkeit des Materialstrangs 1 bekannt ist, die Verbindungsstelle auch sehr exakt positionsmäßig bestimmen und dementsprechend nachgeschaltete Peripheriegeräte entsprechend ansteuern, falls erforderlich.

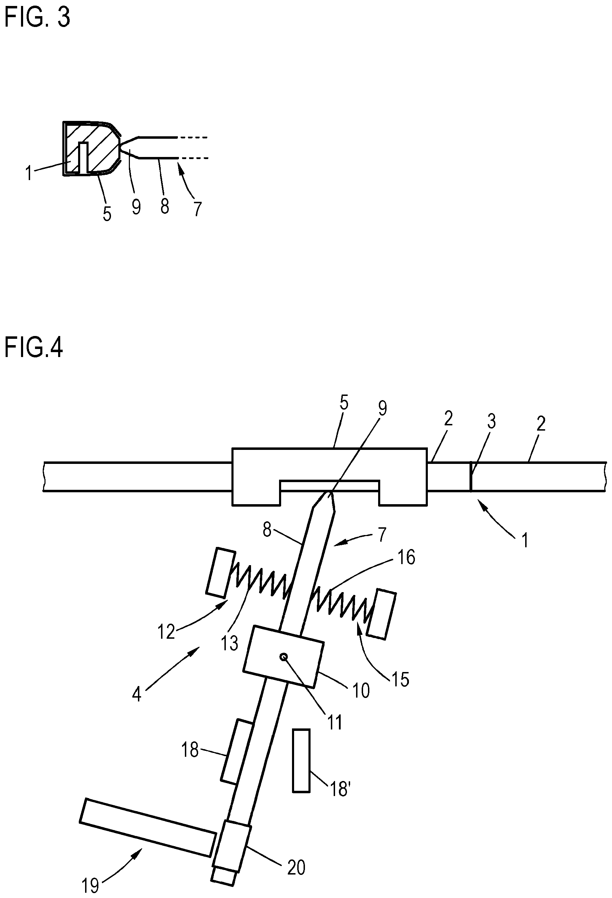

Fig. 3 zeigt eine Schnittansicht durch die Strangführung 5 in Richtung des Pfeils III in Fig. 1, also entgegen zur Transportrichtung gemäß Pfeil P1. Die Strangführung 5 ist in diesem Bereich quasi U-förmig ausgeführt und entspricht hier weitestgehend und in den vorderen und hinteren Bereichen nahezu vollständig der Querschnittsform des Materialstrangs 1, der hier exemplarisch seitlich eingeschnitten, also geschlitzt ist, jedoch auch beliebige andere Geometrie haben kann. Ersichtlich wird aufgrund des formkompatiblen Umgriffs der Strangführung 5 um den Materialstrang 1 sichergestellt, dass dieser sich im Bereich, in dem der Druckkörper 7 respektive die gerundete Spitze 9 der Taststange 8 gegen die Strangoberfläche von der Seite her drückt, nicht ausweichen kann.

Fig. 4 zeigt eine Prinzipdarstellung einer erfindungsgemäßen Vorrichtung 4 einer zweiten Ausführungsform, die insoweit identisch der Vorrichtung 4 aus den Figuren 1 und 2 entspricht. Anders ist hier lediglich die Anordnung der ersten und zweiten Spannmittel 12, 15, also der Federelemente 13 und 16. Diese sind ersichtlich hier nicht an der Halterung 10 angeordnet, sondern direkt an dem Druckkörper 7, also der Taststange 8. Sie befinden sich auch hier außerhalb der Schwenkachse 11. Auch hier sind die Federelemente 13, 16 einander gegenüberliegend angeordnet, arbeiten also gegeneinander.

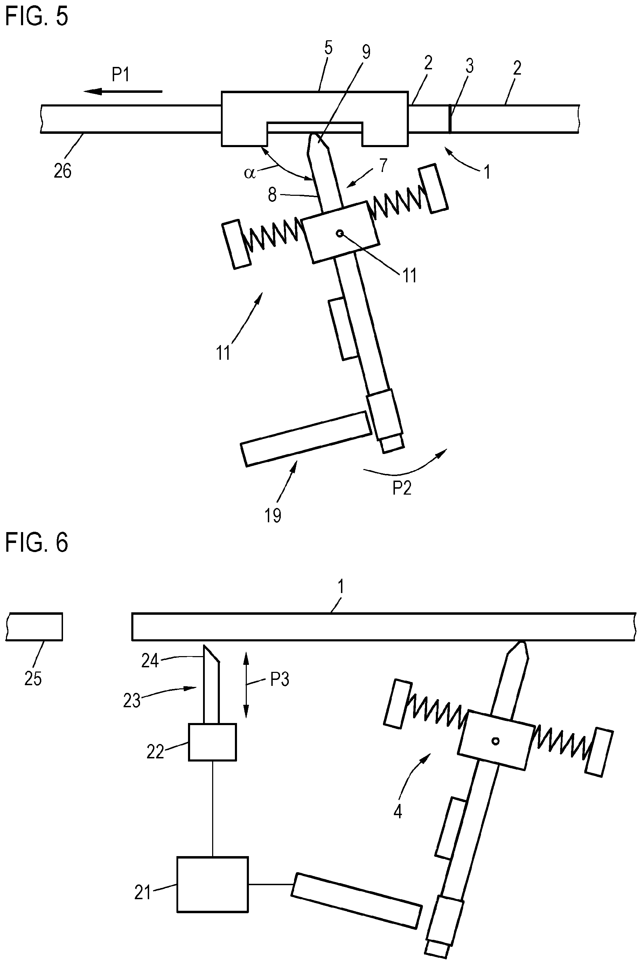

Fig. 5 zeigt eine weitere dritte Ausgestaltung der erfindungsgemäßen Vorrichtung 4, die wiederum vom Aufbau her identisch zu der aus Fig. 1 ist, jedoch eine andere Relativposition respektive Orientierung des Druckkörpers 7, also der Taststange 8 zur Längsrichtung des Materialstrangs 1 respektive seiner Bewegungsrichtung gemäß Pfeil P1 aufweist. Sie steht unter einem Winkel α > 90° zur Transportrichtung, wie Fig. 5 zeigt. Läuft hier wieder eine Verbindungsstelle 3 in den Bereich der Spitze 9 der Taststange 7, so wird diese wiederum um die Schwenkachse 11 verschwenkt, was auch hier dazu führt, dass die Taststange 8 geringfügig von der Sensoreinrichtung 19 wegbewegt wird, wie durch den Pfeil P2 dargestellt ist.

Fig. 6 zeigt schließlich eine Prinzipdarstellung einer Verarbeitungseinrichtung, umfassend eine erfindungsgemäße Vorrichtung 4, die hier die bereits beschriebene Steuerungseinrichtung 21 umfasst, der als Peripheriegerät 22 eine Schneideinrichtung 23 mit einem, wie durch den Doppelpfeil P3 dargestellt, vertikal beweglichen Schneidmesser 24 zugeordnet ist. Die Steuerungseinrichtung 21 steuert die Schneideinrichtung 23 derart, dass, solange keine Verbindungsstelle 3 detektiert wird, stets gleiche Längenabschnitte 25 von dem endlosen Materialstrang 1 abgeschnitten werden, die anschließend zur Bildung einer Türdichtung mit einem Applikationsroboter verarbeitet werden.

Ergibt die Verbindungsstellenerfassung mit der Vorrichtung 4 jedoch, dass eine Verbindungsstelle 3 detektiert wurde, so steuert die Steuerungseinrichtung 21 die Schneideinrichtung 23 derart an, dass das Schneidmesser 24 unmittelbar nach Durchlaufen der Verbindungsstelle 3 durch die Schneideinrichtung 23 das durchgelaufene Strangstück abschneidet, so dass sichergestellt ist, dass die Verbindungsstelle 3 nicht Teil einer Türdichtung werden kann. Das abgeschnittene, zu kurze Strangstück wird verworfen, ein neues, korrekt bemessenes und verbindungsstellenfreies Strangstück wird anschließend wieder geschnitten.

## Patentansprüche

1. Vorrichtung, ausgebildet zum Erfassen einer Verbindungsstelle (3) an einem aus einer Vielzahl von miteinander verbundenen Strangabschnitten (2) bestehenden flexiblen Materialstrang (1), insbesondere einem Dichtmaterialstrang, umfassend einen gegen und in den Materialstrang (1), diesen deformierend, drückenden, schwenkbaren Druckkörper (7), an dem der Materialstrang (1) vorbei bewegbar ist, sowie eine eine Schwenkbewegung des Druckkörpers (7), die durch eine an der Verbindungsstelle gegebene geänderte Materialdichte erwirkbar ist, erfassende Sensoreinrichtung (19).

2. Vorrichtung nach Anspruch 1,
**dadurch gekennzeichnet,**
**dass** der Druckkörper (7) eine schwenkbar gelagerte Taststange (8) ist.

3. Vorrichtung nach Anspruch 2,
**dadurch gekennzeichnet,**
**dass** die Taststange (8) unter einem Winkel (α) kleiner 90° zur Zugrichtung des Materialstrangs (1) angeordnet ist, oder dass die Taststange unter einem Winkel (α) größer 90° zur Zugrichtung des Materialstrangs (1) angeordnet ist.

4. Vorrichtung nach Anspruch 2 oder 3,
**dadurch gekennzeichnet,**
**dass** die Taststange (8) in einer Halterung (10), die schwenkbar gelagert ist, fixiert ist.

5. Vorrichtung nach einem der vorangehenden Ansprüche,
**dadurch gekennzeichnet,**
**dass** ein Spannmittel (12) zum Drücken des Druckkörpers (7) gegen den Materialstrang (1) vorgesehen ist.

6. Vorrichtung nach Anspruch 5,
**dadurch gekennzeichnet,**
**dass** ein zweites Spannmittel (15) zum Bewegen des Druckkörpers (7) in eine Grundstellung, das entgegengesetzt zum ersten Spannmittel (12) arbeitet, vorgesehen ist.

7. Vorrichtung nach Anspruch 6,
**dadurch gekennzeichnet,**
**dass** ein die Grundstellung des Druckkörpers (7) definierender Anschlag (18) vorgesehen ist.

8. Vorrichtung nach einem der Ansprüche 5 bis 7,
**dadurch gekennzeichnet,**
**dass** als erstes und/oder zweites Spannmittel (12, 15) ein Federelement (13, 16) vorgesehen ist.

9. Vorrichtung nach einem der vorangehenden Ansprüche,
**dadurch gekennzeichnet,**
**dass** der Druckkörper (7), insbesondere die Taststange (8) aus Kunststoff ist.

10. Vorrichtung nach einem der vorangehenden Ansprüche,
**dadurch gekennzeichnet,**
**dass** die Sensoreinrichtung (19) einen induktiv, kapazitiv oder optisch arbeitenden Sensor umfasst.

11. Vorrichtung nach einem der vorangehenden Ansprüche,
**dadurch gekennzeichnet,**
**dass** am Druckkörper (7), insbesondere an der Taststange (8), ein mit der Sensoreinrichtung (19) interagierendes Element (20) angeordnet ist.

12. Vorrichtung nach Anspruch 11,
**dadurch gekennzeichnet,**
**dass** das Element (20) ein metallenes Element ist.

13. Vorrichtung nach einem der vorangehenden Ansprüche,
**dadurch gekennzeichnet,**
**dass** eine Strangführung (5) vorgesehen ist, mit einer seitlichen Öffnung (6), in der der Druckkörper (7) am freiliegenden Materialstrang (1) angreift, oder dass zwei in Förderrichtung des Materialstrangs (1) voneinander beabstandete Strangführungen (5) vorgesehen sind, zwischen denen der Druckkörper (7) am Materialstrang (1) anliegt.

14. Vorrichtung nach einem der vorangehenden Ansprüche,
**dadurch gekennzeichnet,**
**dass** eine Steuerungseinrichtung (21) vorgesehen ist, die mit der Sensoreinrichtung (19) sowie einer über sie in Abhängigkeit der Sensorerfassung ansteuerbaren, der Verbindungsstellenerfassung nachgeschalteten Schneideinrichtung (23) kommuniziert.

15. Verfahren zum Erfassen einer Verbindungsstelle (3) an einem aus einer Vielzahl von miteinander verbundenen Strangabschnitten (2) bestehenden flexiblen Materialstrang (1), insbesondere einem Dichtmaterialstrang, **dadurch gekennzeichnet, dass** der Materialstrang (1) an einem gegen und in ihn drückenden, den Materialstrang (1) deformierenden, schwenkbaren Druckkörper (7) vorbei bewegt wird, wobei eine durch eine an der Verbindungsstelle (3) gegebene geänderte Materialdichte erwirkte Verschwenkbewegung des Druckkörpers (7) mittels einer Sensoreinrichtung (19) erfasst wird.

## Claims

1. Device designed for detecting a joint (3) on a flexible material strand (1) consisting of a plurality of interconnected strand sections (2), particularly a sealing material strand, comprising a pivotable pressure body (7), which presses against and into the material strand (1) and deforms it, past which the material strand (1) can be moved, as well as a sensor apparatus (19) detecting a pivoting movement of the pressure body (7) which can be affected by a changed material density present at the joint.

2. Device according to claim 1,
**characterised in**
**that** the pressure body (7) is a pivotably mounted sensing rod (8).

3. Device according to claim 2,
**characterised in**
**that** the sensing rod (8) is arranged at an angle (α) of less than 90° to the draw direction of the material strand (1), or that the sensing rod is arranged at an angle (α) of greater than 90° to the draw direction of the material strand (1).

4. Device according to claim 2 or 3,
**characterised in**
**that** the sensing rod (8) is fixed in a holder (10) which is pivotably mounted.

5. Device according to any of the preceding claims,
**characterised in**
**that** a tensioning means (12) is provided for pressing the pressure body (7) against the material strand (1).

6. Device according to claim 5,
**characterised in**
**that** a second tensioning means (15), which works in opposition to the first tensioning means (12), is provided for moving the pressure body (7) into a basic position.

7. Device according to claim 6,
**characterised in**
**that** a stop (18) is provided which defines the basic position of the pressure body (7).

8. Device according to any of claims 5 to 7,
**characterised in**
**that** a spring element (13, 16) is provided as first and/or second tensioning means (12, 15).

9. Device according to any of the preceding claims,
**characterised in**
**that** the pressure body (7), particularly the sensing rod (8), is made of plastic.

10. Device according to any of the preceding claims,
**characterised in**
**That** the sensor apparatus (19) includes an inductively, capacitively or optically working sensor.

11. Device according to any of the preceding claims,
**characterised in**
**that** an element (20) interacting with the sensor apparatus (19) is arranged on the pressure body (7), particularly on the sensing rod (8).

12. Device according to claim 11,
**characterised in**
**that** the element (20) is a metal element.

13. Device according to any of the preceding claims,
**characterised in**
**That** a strand guide (5) is provided having a lateral opening (6) in which the pressure body (7) on the exposed material strand (1) engages, or that two strand guides (5) are provided spaced from one another in conveying direction of the material strand (1), between which the pressure body (7) rests on the material strand (1).

14. Device according to any of the preceding claims,
**characterised in**
But a controlling apparatus (21) is provided which communicates with the sensor apparatus (19) and with a cutting device (23) which can be controlled via said sensor apparatus as a function of the sensor detection and which is situated downstream of the joint detection.

15. Method for detecting a joint (3) on a flexible material strand (1) consisting of a plurality of interconnected strand sections (2), particularly a sealing material strand, **characterised in that** the material strand (1) is moved past a pivotable pressure body (7), which presses against and into it, deforming the material strand (1), wherein a pivoting movement of the pressure body (7), effected by a changed material density present at the joint (3), is detected by means of a sensor apparatus (19).

## Revendications

1. Dispositif, réalisé pour la détection d'un raccord (3) au niveau d'un brin de matériau souple (1) constitué d'une pluralité de sections de brin (2) reliées les unes aux autres, en particulier, un brin de matériau d'étanchéité, comprenant un corps sous pression pivotant (7), poussant contre et dans le brin de matériau (1) et le déformant, corps sous pression au niveau duquel le brin de matériau (1) peut passer, ainsi qu'un appareil capteur (19) détectant un mouvement pivotant du corps sous pression (7) qui peut être obtenu par le biais d'une épaisseur de matériau modifiée donnée au niveau du raccord.

2. Dispositif selon la revendication 1,
**caractérisé en ce que**
le corps sous pression (7) est une tige palpeuse (8) montée de manière pivotante.

3. Dispositif selon la revendication 2,
**caractérisé en ce que**
la tige palpeuse (8) est disposée selon un angle (a) inférieur à 90 ° par rapport à la direction de traction du brin de matériau (1), ou **en ce que** la tige palpeuse (8) est disposée selon un angle (a) supérieur à 90 ° par rapport à la direction de traction du brin de matériau (1).

4. Dispositif selon la revendication 2 ou 3,
**caractérisé en ce que**
la tige palpeuse (8) est fixée dans un support (10) qui est monté de manière pivotante.

5. Dispositif selon l'une quelconque des revendications précédentes,
**caractérisé en ce que**
un moyen de traction (12) est prévu pour pousser le corps sous pression (7) contre le brin de matériau (1).

6. Dispositif selon la revendication 5,
**caractérisé en ce que**
un second moyen de traction (15) est prévu pour le déplacement du corps sous pression (7) dans une position de base qui travaille à l'opposé du premier moyen de traction (12).

7. Dispositif selon la revendication 6,
**caractérisé en ce que**
une butée (18) définissant la position de base du corps sous pression (7) est prévue.

8. Dispositif selon l'une quelconque des revendications 5 à 7,
**caractérisé en ce que**
en tant que premier et/ou second moyen de traction (12, 15) un élément formant ressort (13, 16) est prévu.

9. Dispositif selon l'une quelconque des revendications précédentes,
**caractérisé en ce que**
le corps sous pression (7), en particulier la tige palpeuse (8), est en matière plastique.

10. Dispositif selon l'une quelconque des revendications précédentes,
**caractérisé en ce que**
l'appareil capteur (19) comprend un capteur inductif, capacitif ou optique.

11. Dispositif selon l'une quelconque des revendications précédentes,
**caractérisé en ce que**
au niveau du corps sous pression (7), en particulier au niveau de la tige palpeuse (8), est disposé un élément (20) interagissant avec l'appareil capteur (19).

12. Dispositif selon la revendication 11,
**caractérisé en ce que**
l'élément (20) est un élément métallique.

13. Dispositif selon l'une quelconque des revendications précédentes,
**caractérisé en ce que**
un guide de brin (5) est prévu, avec une ouverture latérale (6) dans laquelle le corps sous pression (7) se met en prise au niveau du brin de matériau (1) libre, ou **en ce que** deux guides de brin (5) à distance l'un de l'autre dans la direction de transport du brin de matériau (1) sont prévus, entre lesquels le corps sous pression (7) jouxte le brin de matériau (1).

14. Dispositif selon l'une quelconque des revendications précédentes,
**caractérisé en ce que**
un appareil de commande (21) est prévu qui communique avec l'appareil de détection (19) ainsi qu'un appareil de coupe (23) pouvant être commandé par celui-ci en fonction de la détection de capteur et en aval de la détection de raccord.

15. Procédé pour la détection d'un raccord (3) au niveau d'un brin de matériau souple (1) constitué d'une pluralité de sections de brin (2) reliées les unes aux autres, en particulier un brin de matériau d'étanchéité, **caractérisé en ce que** le brin de matériau (1) est déplacé au-delà d'un corps sous pression pivotant (7), poussant contre et dans le brin de matériau (1) et le déformant, dans lequel un mouvement de pivotement du corps sous pression (7) obtenu par le biais d'une épaisseur de matériau modifiée donnée au niveau du raccord (3) est détecté au moyen d'un appareil de détection (19).
